# EUROPÄISCHE PATENTANMELDUNG

(11) **EP 1 134 013 A1**
(43) Veröffentlichungstag der Anmeldung: **19.09.2001**
(21) Anmeldenummer: 01100422.3
(22) Anmeldetag: 08.01.2001
(51) Int. Cl.: B01D 39/18, B01D 39/16, A47L 9/14, B01D 46/52

(54) **Plissiertes Filter aus einem mehrlagigen Filtermedium**

(30) Priorität: 17.03.2000 DE 10013315
(71) Anmelder: Firma Carl Freudenberg, 69469 Weinheim (DE)
(72) Erfinder: Herberg, Felix, 64646 Heppenheim (DE); Schultheiss, Wolfram, 69469 Weinheim (DE); Stöcker, Jörg, 76133 Karlsruhe (DE)

(57) **Zusammenfassung**

Die Erfindung betrifft ein plissiertes Filter aus einem mehrlagigen Filtermedium, welches mindestens aus einer Filterpapierschicht mit Flächengewichten von 30-100 g/m², einer Mikrofaser-Vliesschicht mit Flächengewichten von 5-120 g/m² und einer Stützvliesschicht aus synthetischen, polymeren Fasern, mit Flächengewichten von 10-120 g/m² besteht und bei dem die Schichten geschmolzene Polymerbereiche enthalten, durch die die Schichten zusätzlich in sich selbst verfestigt und mit der Papierschicht verbunden sind, wobei das plissierte Filter Trenngrade gegenüber einem Prüfstaub gemäß DIN EN 60312 (IEC 60312) § 5.1.2.5 mit Partikeln > 0,3 µm von mindestens 90 %, > 0,5 µm von mindestens 92 %, > 1 µm von mindestens 93 % und > 3 µm von mindestens 97% bei einer Anfangsdruckdifferenz von maximal 180 Pascal und einer Frontgeschwindigkeit von ca. 2,62 m/s und einer Durchströmgeschwindigkeit durch das Filtermedium von ca. 0,13 m/s erreicht.

## Beschreibung

Die Erfindung betrifft ein plissiertes Filter aus einem mehrlagigen Filtermedium.

Für den Einsatz in Staubsaugern, Raumluftreinigern und/oder Raumklimageräten werden sogenannte S-Klasse oder High-Efficiency Partikulate Air (HEPA)-Filter aus plissiertem Glasfaserpapier eingesetzt. Diese Glasfaserpapierfilter weisen zwar eine sehr hohe Abscheideleistung auf, daneben zeigen sie aber eine Reihe von Nachteilen. So besitzen sie einen sehr hohen Luftwiderstand . Damit ist eine sehr hohe Verstopfungsneigung und eine geringe Konstanz des Luftdurchsatzes beziehungsweise der Luftumwälzung in Staubsaugern, Raumluftreinigern beziehungsweise Raumklimageräten verbunden. Daraus resultiert zusätzlich eine geringe Standzeit des Filters und hohe Wechselkosten für den Anwender. Glasfaserpapierfilter sind nicht veraschbar und können bei mechanischer Beanspruchung brechen, mit der Folge, dass gesundheitsschädigende Glasfaserbruchstücke in den Reinluftstrom gelangen können. Aufgrund ihres hohen Luftwiderstandes müssen Glasfaserpapierfilter sehr dicht gefaitet werden, damit eine genügend große Oberfläche für den Luft - Durchgang zur Verfügung steht. Um ein Berühren der Falten und somit einen Verlust an Filterfläche zu vermeiden, sind Abstandshalter notwendig, die hohe Konfektionierungskosten bedingen.

Die Erfindung hat sich die Aufgabe gestellt ein plissiertes Filter anzugeben, der die Nachteile der bekannten Glasfaserpapierfilter vermeidet.

Erfindungsgemäß wird die Aufgabe durch ein plissiertes Filter gelöst, das mindestens aus einer Filterpapierschicht mit Flächengewichten von 30-100 g/m², einer Mikrofaser-Vliesschicht mit Flächengewichten von 5-120 g/m² und einer Stützvliesschicht aus synthetischen, polymeren Fasern mit Flächengewichten von 10-120 g/m² besteht und bei dem die Schichten geschmolzene Polymerbereiche enthalten, durch die die Schichten zusätzlich in sich selbst verfestigt und mit der Papierschicht verbunden sind, wobei das plissierte Filter Trenngrade gegenüber einem Prüfstaub gemäß DIN EN 60312 (IEC 60312) § 5.1.2.5 mit Partikeln > 0,3 µm von mindestens 90 %, > 0,5 µm von mindestens 92 %, > 1 µm von mindestens 93 % und > 3 µm von mindestens 97 % bei einer Anfangsdruckdifferenz von maximal 180 Pascal und einer Frontgeschwindigkeit von ca. 2,62 m/s und einer Durchströmgeschwindigkeit durch das Filtermedium von ca. 0,13 m/s erreicht. Das erfindungsgemäße Filter weist eine wesentlich geringere Verstopfungsneigung auf und damit eine hohe Konstanz des Luftdurchsatzes beziehungsweise der Luftumwälzung bei Raumluftreinigern beziehungsweise Raumklimageräten. Weiterhin resultieren eine längere Standzeit des Filters und damit geringere Wechselkosten für den Anwender. Glasfaserbruchstücke treten im Beinluftstrom nicht auf, da das Filtemedium aus synthetischen beziehungsweise zellulosischen Fasern besteht. Darüberhinaus ist das Filtermedium veraschbar.

Vorzugsweise ist das Filter eines, bei dem die Filterpapierschicht Flächengewichte von 30-70 g/m², die Mikrofaser-Vliesschicht Flächengewichte von 20-80 g/m² und die Stützvliesschicht Flächengewichte von 10-60 g/m² besitzt, wobei das plissierte FilterTrenngrade gegenüber einem Prüfstaub gemäß DIN EN 60312 (IEC 60312) § 5.1.2.5 mit Partikeln > 0,3 µm von >= 95 %, > 0,5 µm von >= 97 %, >= 1µm von >= 98 % und >=3 µm von >= 99 % bei einer Anfangsdruckdifferenz von maximal 180 Pascal bei einer Frontgeschwindingkeit von ca. 2,62 m/s und einer Durchströmgeschwindigkeit durch das Filtermedium von ca. 0,13 m/s erreicht. Die erfindungsgemäßen Filter besitzen damit eine sehr geringe Druckdifferenz. Aufgrund des geringen Luftwiderstandes des Filtermediums können daher die Faltenabstände größer gehalten werden. Es sind keine Abstandshalter erforderlich, da die Gefahr der Berührung der Falten untereinander nicht besteht. Weiterhin sinken dadurch die Konfektionierungskosten.

Vorteilhafterweise ist das Mikrofaservlies eines, welches durch ein Meltblown-, Jetspin- oder elektrostatisches Spinnverfahren hergestelltes Vlies ist. Entsprechende Mikrofaservliese besitzen ein hohes Staubabscheidungsvermögen, da der Fadendurchmesser der Mikrofasern oder Filamente < 10 µm liegt.

Vorzugsweise ist das Filter eines, bei dem die Stützvliesschicht aus Polypropylen-, Polyester-, Polyacrylnitril- und/oder Polyamidfasern oder Filamenten bestehen, die in Form eines Naßvliesstoffes, Spinnvliesstoffes oder trockengelegten Vliesstoffes mittels thermischer und/oder chemischer Bindung verfestigt sind. Solche Stützvliese weisen hohe mechanische Festigkeitswerte auf.

Vorzugsweise ist zur Verbesserung der Abscheidegrade eine zusätzliche Vorfilterschicht eines Mikrofaser-Vliesstoffes vorgesehen.

Vorzugsweise weisen die einzelnen Filterlagen unterschiedliche Porositäten auf, wodurch neben einem porösen Staubkuchenaufbau auch die Abscheidung feinster Staubteilchen ermöglicht wird bei Vermeidung eines schnellen Aufbaus des Durchgangswiderstands.

Weiterhin bevorzugt ist, dass die Mikrofaser-Vliesschicht eine höhere Porosität als die Papierfilterschicht aufweist.

Zur Verbesserung der Staubabscheideleistung des erfindungsgemäßen Filters ist die Mikrofaser-Vliesschicht elektrostatisch aufgeladen. Der erfindungsgemäße Filter wird vorzugsweise so eingesetzt, dass die Papierfilterschicht zur Rohluftseite zeigt, er kann jedoch auch in entgegengesetzter Richtung durchströmt werden.

Vorzugsweise wird das Filter gerahmt durch Spritzguß, Vliesstoff und/oder Pappe zur Filtration vor oder nach dem Motor von Staubsaugern, Raumluftreinigern oder Klimageräten verwendet. Die sehr geringe Druckdifferenz von maximal 180 Pascal gestattet eine hohe Saugleistung des Staubsaugers, des Raumluftreinigers oder des Raumklimagerätes beziehungsweise eine hohe Konstanz des Luftdurchsatzes. Bei der Verwendung des erfindungsgemäßen Filters in Staubsaugern können in Kombination mit Staubsaugerfilterbeuteln, wie sie beispielsweise aus dem Dokument EP-A 893 151 bekannt sind, Abscheidegrade erreicht werden, die weit über den auf Seite 2 Absatz 3+4 beschriebenen Trenngraden liegen. Nachfolaend wird die Erfindung anhand eines Beisoieles und eines Vergleichsbeispieles dargestellt.

### Beispiel:

Ein Filter, bestehend aus einem Papierfilterschicht mit etwa 50 g/m² Flächengewicht, einem elektrostatisch aufgeladenen Polypropylen-Mikrofaser-Vliesschicht mit etwa 20 g/m² und einem Polypropylen-Spinnvlies mit etwa 15 g/m² wird zu einem Filtermedium zusammenlaminiert, welches ein Flächengewicht von 85 +/- 10 g/m², bei einer Dicke von 0,6 +/- 1 mm aufweist. Das Filter besitzt eine Luftdurchlässigkeit gemäß DIN 53438 bei 2 mbar von > 200 l/m²/s. Ein Filter mit den Abmessungen 260x180x17 mm wurde nach dem Prüfverfahren 1062T(x) Royco 5000/lmp/V120-AC-fein) getestet. Der Prüfvolumenstrom betrug 120 m³/h bei einer Frontgeschwindigkeit von 2,62 m/s und einer Durchströmgeschwindigkeit durch das Filtermedium von 0,13 m/s. Bei einer Anfangsdruckdifferenz von 173 Pascal wurden die in Tabelle 1 zusammengestellten Ergebnisse gefunden.

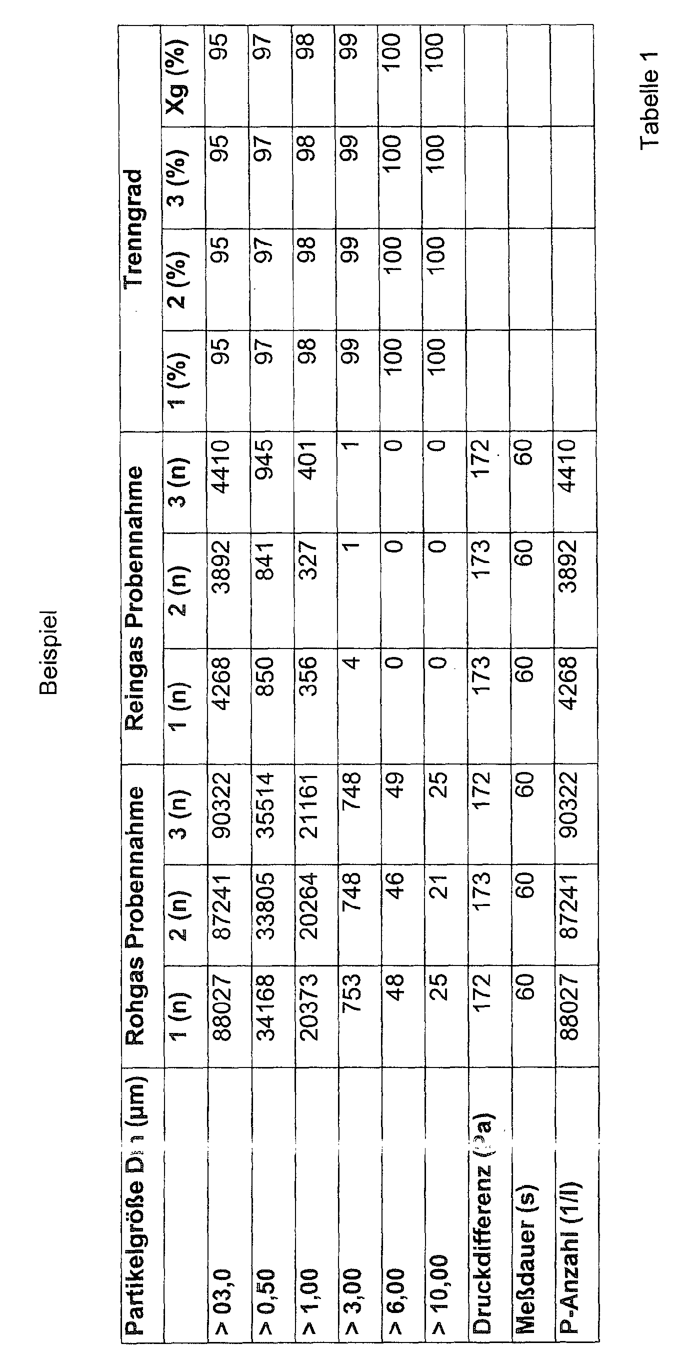

### Vergleichsbeispiel:

Ein Glasfaserfilterpapier mit den Abmessungen 260x180x17 mm wurde unter gleichen Bedingungen getestet. Dabei wurde eine Anfangsdruckdifferenz von 487 Pascal und die in Tabelle 2 zusammengestellten Werte gefunden.

Die Beispiele zeigen, dass bei einer wesentlich geringeren Anfangsdruckdifferenz gute Abscheideleistungen des erfindungsgemäßen Filters erzielt werden.

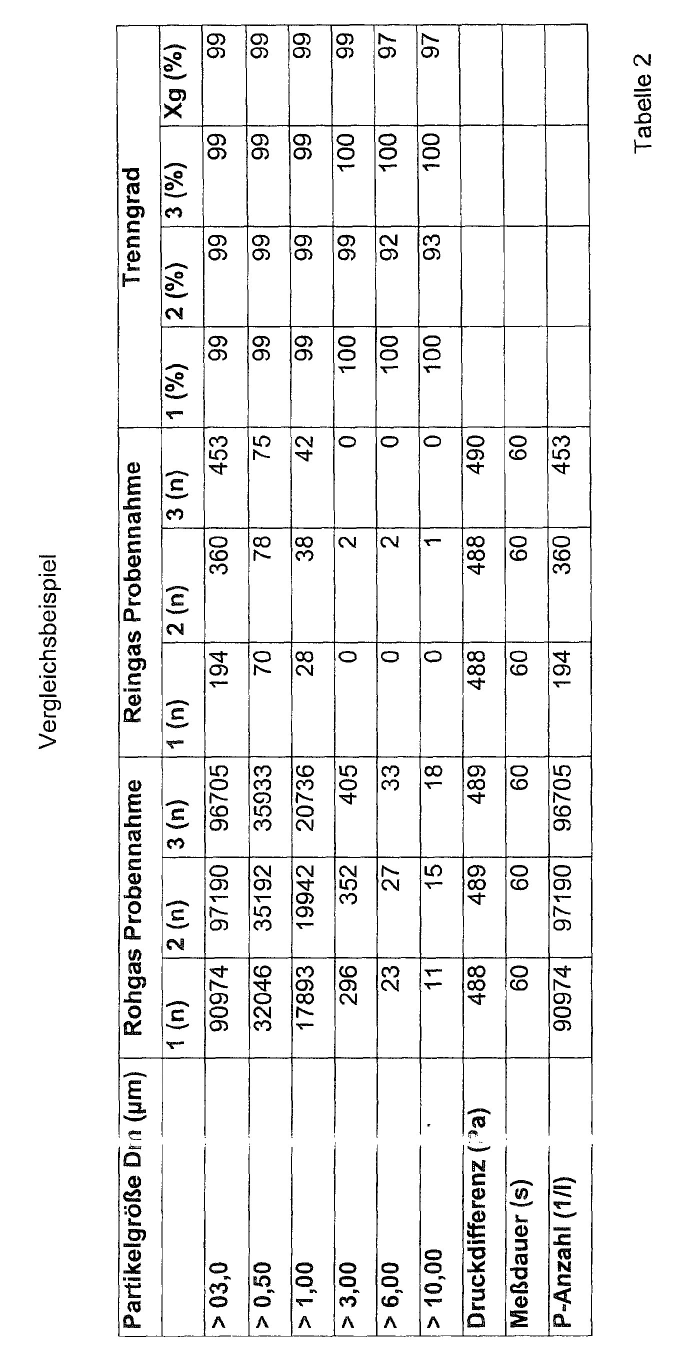

## Patentansprüche

1. Plissiertes Filter aus einem mehrlagigen Filtermedium, **dadurch gekennzeichnet, daß** er mindestens aus einer Filterpapierschicht mit Flächengewichten von 30 bis 100 g/m², einer Mikrofaser-Vliesschicht mit Flächengewichten von 5 bis 120 g/m² und einer Stützvliesschicht aus synthetischen, polymeren Fasern mit Flächengewichten von 10 bis 120 g/m² besteht und daß die Schichten verschmolzene Polymerbereiche enthalten, durch die die Schichten zusätzlich in sich selbst verfestigt und mit der Papierschicht verbunden sind, wobei das plissierte Filter Trenngrade gegenüber einem Prüfstaub gemäß DIN EN 60312 (IEC 60312) Paragraph 5.125
mit Partikeln > 0,3 µm von mindestens 90 %,
0,5 µm von mindestens 92 %,
1 um von mindestens 93 %,
3 µm von mindestens 97 %
bei einer Anfangsdruckdifferenz von maximal 180 Pa und bei einer Frontgeschwindigkeit von ca. 2,62 m/s und einer Durchströmgeschwindigkeit durch das Filtermedium von ca. 0,13 m/s erreicht.

2. Filter nach Anspruch 1, **dadurch gekennzeichnet, daß** die Filterpapierschicht Flächengewichte von 30 bis 70 g/m², die Mikrofaser-Vliesschicht Flächengewichte von 20 bis 80 g/m² und die Stützvliesschicht Flächengewichte von 10 bis 60 g/m² besitzt, wobei das plissierte Filter Trenngrade gegenüber einem Prüfstaub gemäß DIN EN 60312 (IEC 60312) Paragraph 5.125
mit Partikeln > 0,3 um von ≥ 95 %,
0,5 µm von ≥ 97 %,
1 µm von ≥ 98 %,
3 µm von ≥ 99 %
bei einer Anfangsdruckdifferenz von maximal 180 Pa und bei einer Frontgeschwindigkeit von ca. 2,62 m/s und einer Durchströmgeschwindigkeit durch das Filtermedium von ca. 0,13 m/s erreicht.

3. Filter nach einem der Ansprüche 1 oder 2, **dadurch gekennzeichnet, daß** das Mikrofaservlies ein durch ein Melt-Blown-, Jet-Spin- oder elektrostatisches Spinnverfahren hergestelltes Vlies ist.

4. Filter nach einem der Ansprüche 1 bis 3, **dadurch gekennzeichnet, daß** die Stützvliesschicht aus Polypropylen-, Polyester-, Polyacrylnitril- und/oder Polyamidfasern oder Filamenten bestehen, die in Form eines Naßvliesstoffes, Spinnvliesstoffes oder trockengelegten Vliesstoffes mittels thermischer und/oder chemischer Bindung verfestigt sind.

5. Filter nach einem der Ansprüche 1 bis 4, **dadurch gekennzeichnet, daß** eine zusätzliche Vorfilterschicht aus einem Mikrofaservliesstoff vorgesehen ist.

6. Filter nach einem der Ansprüche 1 bis 5, **dadurch gekennzeichnet, daß** die einzelnen Filterlagen unterschiedliche Porositäten aufweisen.

7. Filter nach einem der Ansprüche 1 bis 6 **dadurch gekennzeichnet, daß** die Mikrofaser-Vliesschicht eine höhere Porosität aufweist als die Papierfilterschicht.

8. Filter nach einem der Ansprüche 1 bis 7, **dadurch gekennzeichnet, daß** die Mikrofaser-Vliesschicht elektrostatisch aufgeladen ist.

9. Filter nach einem der Ansprüche 1 bis 8, **dadurch gekennzeichnet, daß** der Filter gerahmt durch Spritzguß, Vliesstoff und/oder Pappe zur Filtration vor oder nach dem Motor von Staubsaugern, Raumluftreinigern oder Raumklimageräten verwendet wird.
